# FASCICULE DE BREVET EUROPEEN

(11) **EP 2 336 938 B1**
(45) Date de publication et mention de la délivrance du brevet: **22.05.2019**
(21) Numéro de dépôt: 10358008.0
(22) Date de dépôt: 01.12.2010
(51) Int. Cl.: G06F 21/77, G06F 21/85

(54) **Procédé de contrôle d'accès à une interface sans contact dans un circuit intégré à double interface de communication avec et sans contact**
Kontrollverfahren des Zugriffs auf eine kontaktlose Schnittstelle in einem integrierten Schaltkreis mit doppelter Kommunikationsschnittstelle mit und ohne Kontakt
Method for controlling access to a contactless interface in an integrated circuit with double communication interface, with and without contact

(30) Priorité: 01.12.2009 FR 0905785
(43) Date de publication de la demande: 22.06.2011
(73) Titulaire: Inside Secure, 13590 Meyreuil (FR)
(72) Inventeur: Jourdain, Joris Michel, 13100 Aix en Provence (FR); Duclos, Rémi Louis Marie, 13600 La Ciotat (FR); Vallieres, Jean-Philippe, 13090 Aix en Provence (FR)
(74) Mandataire: Marchand, André

(56) Documents cités:
- EP-A1- 1 467 312
- WO-A1-2008/013066
- WO-A1-2009/074173
- FR-A1- 2 910 666
- JP-A- 2007 265 200

## Description

La présente invention concerne un procédé de gestion d'une interface de communication sans contact dans un circuit intégré pouvant comporter également une interface de communication à contacts. La présente invention concerne notamment, mais non exclusivement les circuits intégrés pour carte à puce, et en particulier les circuits intégrés pour cartes bancaires.

Une carte bancaire émise par une banque émettrice, peut être transmise au porteur de la carte dans une enveloppe par un service de courrier postal. Si la carte est équipée d'une interface de communication sans contact, un terminal peut communiquer avec la carte à travers l'enveloppe par une liaison de communication sans contact. Une personne mal intentionnée peut donc à l'insu du destinataire de la carte, effectuer une transaction avec la carte. Durant une telle transaction, la carte peut être hors ligne (offline) ou en ligne (online), c'est-à-dire reliée à un réseau tel qu'un réseau bancaire, par l'intermédiaire du terminal auquel elle est connectée. Si la transaction est effectuée en ligne, la carte peut notamment effectuer une demande d'autorisation auprès d'un serveur de transaction avec vérification d'identité du porteur de la carte par la saisie d'un code PIN (Personal Identification Number). L'engagement d'une transaction peut changer un état initial d'une application installée dans le circuit intégré dans la carte. En effet, que la transaction soit ou non autorisée, un compteur de transaction peut avoir été modifié. Il en résulte que la carte n'est plus dans un état initial. Une personne malintentionnée peut aussi récupérer et éventuellement modifier des informations mémorisées dans le circuit intégré, telles que des informations d'identification du porteur de la carte, une date d'expiration, un numéro de carte PAN (Personal Account Number), et des certificats d'authenticité de la carte.

Certaines applications de paiement notamment, sont configurées pour détecter si la carte a déjà effectué une première transaction. Si une transaction engagée avec la carte est la première transaction effectuée par la carte, l'application impose que la transaction soit effectuée en ligne afin d'être préalablement autorisée par un serveur de transaction. Si la transaction est autorisée par le serveur de transaction, l'application autorise ensuite la carte à effectuer des transactions hors ligne. Cette fonctionnalité appelée "New Card" permet d'empêcher l'exécution avec succès de transactions tant que la carte n'a pas été ainsi activée en ligne. Cependant, cette fonctionnalité ne permet d'empêcher ni la réalisation d'une première transaction en ligne, même si celle-ci échoue, ni la réalisation d'une transaction hors ligne si aucune vérification de l'identité du porteur de la carte n'est demandée ou si seulement une vérification visuelle d'une signature par une personne habilitée est exigée. La fonctionnalité "New Card" n'offre donc qu'une sécurité partielle, et oblige le porteur à effectuer une première transaction en ligne. Cette fonctionnalité ne permet donc pas l'émission de cartes immédiatement utilisables sur des terminaux hors ligne. Par ailleurs, certains types de cartes sont incompatibles avec cette fonctionnalité. En outre, cette fonctionnalité n'empêche pas la récupération et le cas échéant la modification d'informations mémorisées par la carte. La demande de brevet JP2007265200 A divulgue un téléphone mobile comprenant une interface de communication sans-contact et un dispositif contrôlant l'accès à cette interface.Le dispositif de contrôle vérifie à chaque accès par un service à l'interface sans contact que le service et l'heure d'accès correspondent à un service et une plage horaire autorisés par une information de permission d'utilisation. La configuration de l'information de permission d'utilisation est effectuée par authentification par PIN ou par apprentissage automatisé.

La demande de brevet FR 2910666 A1 décrit un circuit intégré avec une interface de communication à contact et une interface de communication sans contact comprenant des moyens de sécurité pour détecter une attaque et interdire une communication par une des interfaces après détection d'une attaque en faisant passer un indicateur d'autorisation d'utilisation de l'interface sans contact à un état d'interdiction.

Ainsi, la présence d'une interface sans contact dans une carte à circuit intégré soulève de nombreux problèmes relatifs à la protection de la vie privée (espionnage du courrier), à la protection de données d'identité mémorisées par la carte contre l'usurpation d'identité et contre leur usage commercial, à la protection des données de transactions de la carte, et à la protection de la carte contre son utilisation frauduleuse, que ce soit en ligne ou hors ligne. Si la carte présente la fonctionnalité "New Card", celle-ci oblige l'utilisateur à connecter une première fois la carte à un terminal en ligne. Si la carte intègre une application de paiement et qu'un compteur est incrémenté à chaque transaction que celle-ci soit acceptée ou refusée, le destinataire de la carte peut recevoir une carte non vierge. Si le serveur de transaction détecte plusieurs essais de transaction infructueux avec une carte, cela peut conduire à l'émission d'une notification au destinataire de la carte, et éventuellement au blocage de la carte, avant même que le destinataire n'ait reçu la carte. Par conséquent, la présence d'une interface sans contact dans une carte à circuit intégré peut amener une perception négative de la part des utilisateurs.

Il est donc souhaitable de renforcer la sécurité des cartes à circuit intégré présentant une interface sans contact, sans pour autant en limiter les applications possibles, ni compliquer leur utilisation. L'invention est définie par les revendications indépendantes 1 et 12.

Un mode de réalisation concerne un procédé de contrôle d'accès à une interface de communication d'un circuit intégré comprenant un premier circuit d'interface de communication, le procédé comprenant des étapes d'interception par une couche logicielle de contrôle d'accès, d'événements transmis entre le premier circuit d'interface de communication et plusieurs applications installées dans une couche logicielle applicative dans le circuit intégré, d'attribution à chacune des applications de la couche applicative d'un paramètre spécifique de l'application indiquant si l'application est autorisée à utiliser le premier circuit d'interface de communication, de transmission par la couche de contrôle d'accès, d'un événement intercepté entre le premier circuit d'interface de communication et l'une des applications de la couche applicative, uniquement si le paramètre spécifique de l'application indique que l'application est autorisée à utiliser le premier circuit d'interface de communication, et de mise à jour par la couche de contrôle d'accès du paramètre spécifique de l'application si une condition est remplie par des événements interceptés, transmis entre une autre des applications de la couche applicative et le premier circuit d'interface de communication.

Selon un mode de réalisation, le procédé comprend une étape de mise à jour par la couche de contrôle d'accès, du paramètre spécifique d'une des applications indiquant si l'application est autorisée à utiliser le premier circuit d'interface de communication, en fonction des événements interceptés, transmis entre le premier circuit d'interface de communication et l'application.

Selon un mode de réalisation, le procédé comprend une étape d'autorisation par la couche de contrôle d'accès, de l'une des applications de la couche applicative à utiliser le premier circuit d'interface de communication si une condition est remplie par des événements transmis entre l'application et un second circuit d'interface de communication du circuit intégré.

Selon un mode de réalisation, le premier circuit d'interface de communication est de type sans contact.

Selon un mode de réalisation, le second circuit d'interface de communication est de type à contact ou sans contact.

Selon un mode de réalisation, le procédé comprend une étape de mise à jour par la couche de contrôle d'accès, du paramètre spécifique de l'une des applications de la couche applicative, si une condition est remplie par des événements transmis entre une autre des applications de la couche applicative et le second circuit d'interface de communication du circuit intégré.

Selon un mode de réalisation, le procédé comprend des étapes exécutées par la couche de contrôle d'accès, de vérification qu'une condition est remplie par l'un des événements interceptés, si le paramètre spécifique de l'une des applications de la couche applicative indique que l'application n'est pas autorisée à utiliser le premier circuit d'interface de communication, et si la condition est remplie, transmission de l'événement intercepté et modification du paramètre spécifique de l'application pour qu'il indique que l'application est autorisée à utiliser le premier circuit d'interface de communication.

Selon un mode de réalisation, la modification du paramètre spécifique de l'application pour qu'il indique que l'une des applications de la couche applicative est autorisée à utiliser le premier circuit d'interface de communication, n'est effectuée que si elle est autorisée par un autre paramètre spécifique de l'application.

Selon un mode de réalisation, le procédé comprend des étapes de vérification par la couche de contrôle d'accès, qu'une condition est remplie par l'un des événements interceptés si le paramètre spécifique de l'une des applications indique que l'application est autorisée à utiliser le premier circuit d'interface de communication, et si la condition est remplie, l'événement intercepté n'est pas transmis et le paramètre spécifique de l'application est modifié par la couche de contrôle d'accès pour qu'il indique que l'application n'est plus autorisée à utiliser le premier circuit d'interface de communication.

Selon un mode de réalisation, le procédé comprend des étapes exécutées par la couche de contrôle d'accès, de mémorisation pour l'une des applications de la couche applicative d'un paramètre spécifiant si le contrôle d'accès à le premier circuit d'interface de communication est activé pour l'application, et de vérification de l'état du paramètre à chaque interception d'un événement transmis pour l'application, les événements étant systématiquement transmis entre le premier circuit d'interface de communication et l'application si le paramètre indique que le contrôle d'accès à le premier circuit d'interface de communication n'est pas activé.

Selon un mode de réalisation, le procédé comprend des étapes exécutées par la couche de contrôle d'accès, de mémorisation de règles d'autorisation et/ou d'interdiction de l'utilisation de chaque circuit d'interface de communication du circuit intégré pour chacune des applications de la couche applicative, de mémorisation d'états de vérification des règles et de mise à jour des états de vérification des règles en fonction de chaque événement intercepté.

Des modes de réalisation peuvent également concerner un circuit intégré comprenant circuit d'interface de communication connecté soit à des contacts, soit à un circuit d'antenne et un microcircuit configuré pour mettre en oeuvre le procédé tel que défini précédemment.

Selon un mode de réalisation, le circuit intégré comprend un circuit d'interface de communication à contact connecté à des contacts et un circuit d'interface de communication sans contact connecté à un circuit d'antenne.

Selon un mode de réalisation, le circuit intégré comprend une couche applicative rassemblant au moins plusieurs applications installées dans le circuit intégré, et une couche de contrôle d'accès configurée pour intercepter des événements transmis entre la couche applicative et chaque circuit d'interface de communication, et transmettre un événement intercepté seulement si un paramètre spécifique d'une application destinatrice de l'événement ou ayant émis l'événement, indique que l'application est autorisée à utiliser le circuit d'interface de communication.

Des modes de réalisation peuvent également concerner une carte à circuit intégré, comprenant un circuit intégré tel que défini précédemment.

Des exemples de réalisation de l'invention seront décrits dans ce qui suit, à titre non limitatif en relation avec les figures jointes parmi lesquelles :
la figure 1 représente schématiquement une carte à circuit intégré,
la figure 2 représente schématiquement le circuit intégré de la carte à circuit intégré, comportant une double interface de communication, avec et sans contact,
la figure 3 représente différentes couches logicielles mises en oeuvre par le circuit intégré, selon un mode de réalisation,
les figures 4, 5A, 5B et 6 représentent des séquences de traitements effectués par le circuit intégré, selon un mode de réalisation,
les figures 7A et 7B représentent des séquences de traitements effectués par le circuit intégré selon un autre mode de réalisation.

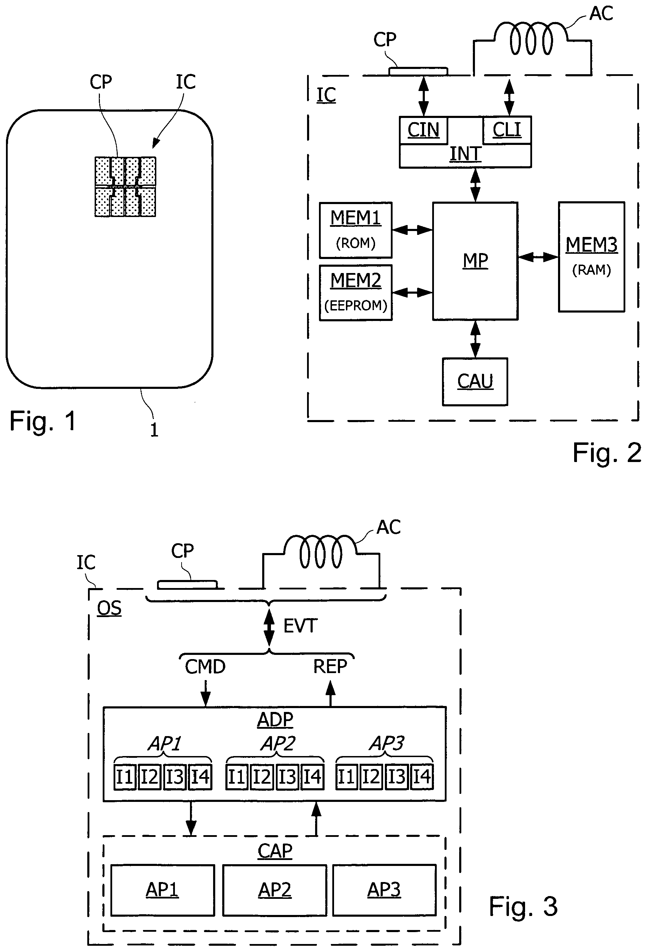

La figure 1 représente une carte à circuit intégré 1 supportant un circuit intégré IC à double interface de communication comportant une interface à contacts et une interface sans contact, l'interface à contacts étant connectée à des plages de contact CP.

La figure 2 représente le circuit intégré IC connecté aux plages de contact CP et à un circuit d'antenne AC. Le circuit intégré IC comprend un processeur MP, par exemple de type microprocesseur ou microcontrôleur, un circuit d'interface de communication INT et des mémoires MEM1, MEM2, MEM3, dont une mémoire volatile MEM3 et des mémoires non volatiles MEM1, MEM2. Les mémoires non volatiles MEM1, MEM2 peuvent être respectivement de type à lecture seule (ROM) et réinscriptible (EEPROM ou Flash). Le circuit d'interface INT comprend un circuit d'interface de communication avec contact CIN connecté aux plages de contact CP et un circuit d'interface de communication sans contact CLI connecté au circuit d'antenne AC. Le circuit INT assure notamment la modulation et démodulation de données transmises entre le processeur MP et le circuit d'antenne AC ou les plages de contact CP. Le circuit intégré peut également comprendre des circuits de calculs cryptographiques CAU. Les fonctions cryptographiques assurées par le circuit CAU peuvent être également réalisées non pas par un circuit spécialisé, mais directement par le processeur MP. Les plages de contact CP et l'interface CIN sont par exemple conformes à la norme ISO 7816. Le circuit d'antenne AC et l'interface CLI sont par exemple de type RFID HF ou UHF ou conformes à la norme ISO 14443 ou ISO 15693. Les interfaces CIN et CLI comprennent chacune par exemple un port de communication de type UART (Universal Asynchronous Receiving Transmitting).

La figure 3 représente des programmes installés dans les mémoires non volatiles MEM1, MEM2 et exécutés par le processeur MP. Les programmes installés comprennent un système d'exploitation OS, et une couche applicative CAP qui échange avec le circuit d'interface INT événements EVT comprenant des commandes CMD transmises à par le circuit INT à la couche CAP, et des réponses REP à ces événements transmis par la couche CAP au circuit INT. La couche applicative CAP comprend une ou plusieurs applications AP1, AP2, AP3 installées dans le circuit IC. Le système d'exploitation OS indique pour chaque événement provenant d'une interface de communication, par quelle interface CLI ou CIN l'événement a été reçu.

Selon un mode de réalisation, les programmes installés dans le circuit intégré comprennent une couche de contrôle d'accès ADP pour contrôler l'accès à l'interface de communication sans contact CLI. La couche ADP est configurée pour intercepter les événements EVT provenant du circuit d'interface INT et les transmettre vers une application destinatrice si cette dernière est autorisée à utiliser l'interface par laquelle l'événement a été reçu. La couche ADP gère des paramètres I1, I2, I3 et I4 pour chaque application installée AP1-AP3 dans le circuit IC. Le paramètre I1 indique si l'application doit ou non utiliser la couche de contrôle ADP pour recevoir et émettre un événement, c'est-à-dire si le contrôle de l'accès à une interface de communication, par exemple l'interface sans contact CLI, est activé ou non pour l'application. Le paramètre I2 indique si l'application est autorisée ou non à utiliser l'interface de communication dont l'accès est contrôlé, ici, l'interface sans contact CLI. Un ou plusieurs paramètres I3 peuvent être utilisés pour spécifier des règles portant sur des événements liés à une transaction provenant du circuit d'interface INT ou de l'application, chaque paramètre I3 indiquant un événement intervenant dans une règle. Peuvent être considérés comme un événement, la réception par le circuit d'interface INT d'une commande destinée à l'application ou pouvant être interprétée par l'application, et l'émission par l'application d'un message qui peut être une réponse à une commande reçue par l'application. Les règles sont applicables lorsque le paramètre I2 indique que l'application n'est pas autorisée à utiliser l'interface CLI. Le paramètre I4 optionnel spécifie si l'application peut ou non être autorisée à accéder à l'interface CLI lorsque certaines des règles spécifiées pour l'application sont satisfaites. Si le paramètre I4 n'est pas défini, l'application est autorisée à accéder à l'interface CLI sous réserve que certaines des règles définies pour l'application soient satisfaites.

Une règle est définie par une combinaison logique faisant intervenir un ou plusieurs événements mentionnés précédemment et/ou une ou plusieurs autres règles. Chaque règle peut en outre être associée à un paramètre indiquant si la règle est suffisante, c'est-à-dire si la réalisation de la règle seule autorise l'accès de l'application à l'interface CLI, ou si une ou plusieurs autres règles doivent être satisfaites pour autoriser l'application à accéder à l'interface CLI. Cette disposition permet de faciliter la définition de règles plus complexes dépendant de la réalisation d'autres règles spécifiées comme non suffisantes. Cette disposition permet également de spécifier une séquence d'événements devant apparaître pour autoriser l'application à accéder à l'interface CLI.

Par exemple, les événements suivants peuvent être utilisés pour définir des règles pour une application AP1-AP3 :
- I3-1 : sélection de l'application,
- I3-2 : GPO exécuté avec succès par l'application : réponse positive reçue de l'application à la suite d'une commande d'initiation d'une transaction GPO (Get Processing Option) reçue de l'interface INT,
- I3-3 : VERIFY PIN exécuté avec succès par l'application : réponse positive reçue de l'application à la suite d'une commande de vérification de code PIN reçue de l'interface INT, et
- I3-4 : EXTERNAL AUTH. exécuté avec succès par l'application : réponse positive reçue de l'application à la suite d'une commande d'authentification en ligne reçue de l'interface INT.

Les règles suivantes peuvent être définies :
- Règle 1 (insuffisante) : GPO exécuté avec succès (I3-2 = 1),
- Règle 2 (insuffisante) : VERIFY PIN exécuté avec succès (I3-3 = 1),
- Règle 3 (insuffisante) : EXTERNAL AUTH. exécuté avec succès (I3-4 = 1),
- Règle 4 (insuffisante) : Sélection de l'application (I3-1 = 1) ET Règle 1,
- Règle 5 (suffisante) : Règle 4 ET (Règle 2 OU Règle 3).

Chaque règle est également associée à un état mémorisant si oui ou non la règle a été satisfaite.

En pratique, les paramètres I3 peuvent être définis dans un tableau associant à chaque paramètre I-3, un événement, un code d'instruction, et un code de retour (succès ou échec) qui est initialisé à "échec" et qui passe à l'état "succès" lorsque l'événement se produit. Par exemple, les paramètres I3 sont définis par des codes hexadécimaux dans le tableau 1 suivant :

**Tableau 1**

| | Evénement | Code instruction | Code retour |
|---|---|---|---|
| I3-1 | Sélection application | 01 | Echec |
| I3-2 | GPO | 02 | Echec |
| I3-3 | VERIFY PIN | 03 | Echec |
| I3-4 | EXTERNAL AUTH. | 04 | Echec |

Un autre tableau peut être utilisé pour associer des codes d'opérateurs logiques tels que AND, OR, XOR, NOT, "(" et ")" à d'autres codes non utilisés par les paramètres I3 :

**Tableau 2**

| AND | OR | XOR | NOT | ( | ) |
|---|---|---|---|---|---|
| F1 | F2 | F3 | F4 | F5 | F6 |

La règle - Sélection application ET GPO ET (VERIFY PIN OU EXTERNAL AUTH.) - peut ainsi être définie par la succession de codes hexadécimaux suivante :
01 F1 02 F1 F5 03 F2 04 F6

A l'initialisation d'une application AP1-AP3, tous ses paramètres I1-I4 sont initialisés de manière appropriée, afin d'être cohérents entre eux et à un état d'activation choisi de l'interface sans contact CLI vis-à-vis de l'application. Au fur et à mesure de l'exécution d'une transaction avec l'application, les paramètres I2, I3, I4 de l'application peuvent changer d'état pour refléter de manière cohérente les événements survenus. Durant son exécution, l'application peut changer d'état et atteindre un certain état, dans lequel il peut être choisi de réinitialiser un ou plusieurs des paramètres I2, I3, I4 de l'application ou l'état de règles. Lorsque l'application reçoit ou génère un événement utilisé dans une règle, l'application conserve l'état de l'événement dans un paramètre I3 pour pouvoir ensuite évaluer si la règle est ou non satisfaite. Si une règle change d'état pour passer à insatisfaite, l'application peut décider simplement de réinitialiser l'état de la règle devenue insatisfaite ou bien de réinitialiser l'état de toutes les règles, notamment si ce changement d'état peut révéler une tentative de fraude. Si une règle change d'état pour passer à satisfaite, l'application vérifie si la règle est suffisante. Si tel est le cas, l'application peut accéder à l'interface sans contact CLI, sauf si le paramètre I4 empêche cette autorisation. Si le paramètre I4 empêche cette autorisation, il peut être décidé d'initialiser l'état de chacune des règles de l'application.

Par ailleurs, lorsqu'une application utilise l'interface avec contact CIN, elle peut fonctionner normalement et effectuer les traitements additionnels liés à l'activation / désactivation de l'accès à l'interface CLI. Si le paramètre I1 indique que l'application utilise la couche logicielle ADP et si le paramètre I2 de l'application indique qu'elle n'est pas autorisée à utiliser l'interface CLI, la couche ADP refuse de sélectionner ou d'activer l'application à la suite d'un événement provenant de l'interface CLI. Ce refus peut s'exprimer par une absence de réponse de la part de l'application ou un retour particulier d'un mécanisme de contrôle d'applications à un gestionnaire d'applications. Dans ce cas, l'application ne traite pas les événements provenant de l'interface CLI jusqu'à une nouvelle tentative d'utilisation de l'application. Dans tous les autres cas, l'application fonctionne normalement sans être affectée par la couche ADP. Durant l'exécution de l'application, il peut arriver que l'accès à l'interface CLI ne soit plus autorisé. Il peut alors être prévu de mettre à jour les paramètres et les états des règles de l'application, pour autoriser à nouveau l'accès de l'application à l'interface CLI. Autrement dit, l'accès à l'interface CLI peut être autorisé et refusé pour une application autant de fois que nécessaire.

Il est ainsi possible de bloquer l'utilisation de l'interface sans contact CLI pour une application de paiement notamment, jusqu'à que le porteur de la carte ait été authentifié par exemple hors ligne par la saisie d'un code PIN. Ainsi, il n'est pas nécessaire d'effectuer une première transaction en ligne. Le blocage de l'accès à l'interface CLI pour une application de paiement par exemple, n'entraîne pas nécessairement une interdiction d'accès à cette interface pour d'autres applications installées dans le circuit intégré IC. Par ailleurs, contrairement à la fonctionnalité "New Card" qui implique la réalisation avec succès d'une première transaction en ligne, une application interdite d'accès à l'interface CLI par le paramètre I2 ne peut engager aucune transaction par cette interface. Aucun compteur de transaction n'est donc modifié pour cette application.

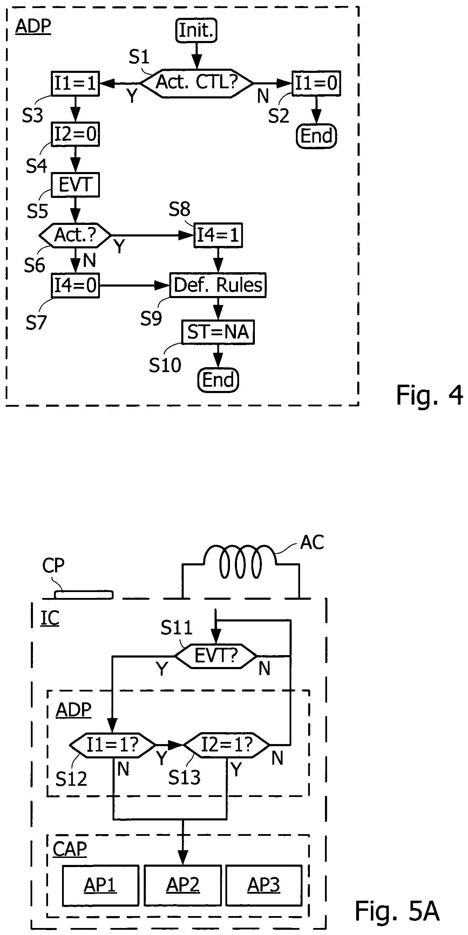

La figure 4 représente une séquence de traitement exécutée par le processeur MP lors de l'installation d'une application particulière AP1-AP3. Cette séquence comprend une étape S1 où il est déterminé si le contrôle de l'interface sans contact CLI doit ou non être activé pour l'application. Si ce contrôle ne doit pas être activé, la séquence se termine à l'issue d'une étape S2 où le paramètre I1 est mis dans un état inactif (par exemple à 0) indiquant que le contrôle de l'accès à l'interface CLI n'est pas activé pour cette application. Dans le cas contraire, les étapes S3 à S6 sont exécutées successivement. A l'étape S3, le paramètre I1 de l'application est mis dans un état actif (par exemple à 1) indiquant que le contrôle de l'accès à l'interface CLI est activé pour l'application. A l'étape S4, le paramètre I2 est mis dans un état d'interdiction (par exemple à 0) indiquant que l'utilisation par l'application de l'interface CLI n'est pas autorisée. A l'étape S5, les événements utilisés dans les règles sont spécifiés par des paramètres I3 de l'application. A l'étape S6, si l'accès à l'interface CLI par l'application est autorisé sous réserve que certaines règles soient satisfaites, les étapes S8 à S10 sont exécutées, sinon les étapes S7, S9 et S10 sont exécutées. A l'étape S7, le paramètre I4 est mis dans un état verrouillé (par exemple à 0) indiquant que l'application n'a pas accès à l'interface CLI même si certaines règles sont satisfaites. A l'étape S8, le paramètre I4 est mis dans un état déverrouillé (par exemple à 1) indiquant que l'application peut avoir accès à l'interface CLI si des règles sont satisfaites. A l'étape S9, sont définies des règles à satisfaire pour outrepasser une interdiction d'accès à l'interface CLI. A l'étape S10, l'état d'exécution de chaque règle définie à l'étape S9 est initialisé à "non satisfaite". Il est à noter qu'à la suite de l'étape S7, des règles peuvent être définies et initialisées même si le paramètre I4 est à l'état verrouillé indiquant que l'interdiction d'utilisation de l'interface CLI ne peut pas être outrepassée si des règles sont satisfaites, car le paramètre I4 peut changer d'état à la suite de l'arrivée d'événements particuliers.

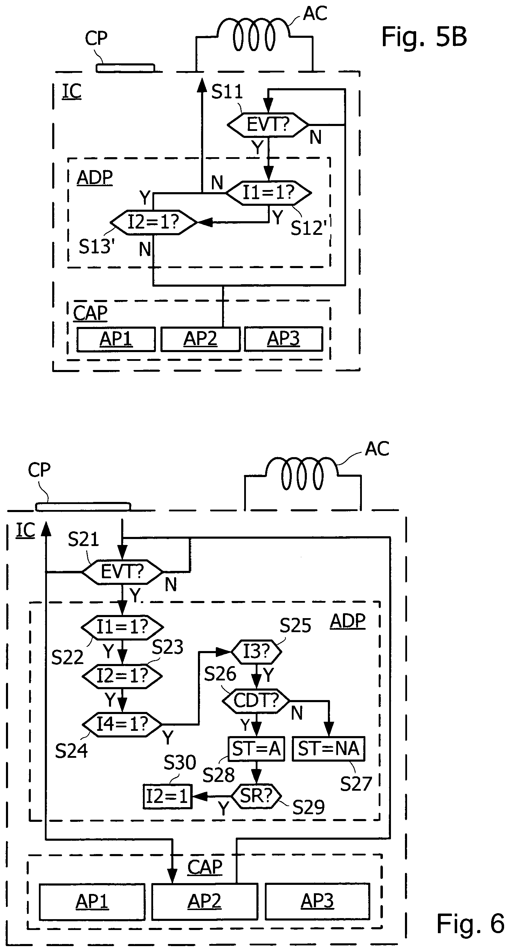

Les figures 5A et 5B représentent des séquences d'étapes exécutées à la suite de l'activation du circuit intégré IC par l'interface sans contact CLI. La séquence d'étapes de la figure 5A est exécutée à la suite de la réception par l'interface CLI d'un événement destiné à l'une des applications AP1-AP3. La séquence d'étapes de la figure 5B est exécutée à la suite de l'émission d'un événement par l'une des applications AP1-AP3.

Sur la figure 5A, la séquence comprend des étapes S11 à S13, les étapes S12 et S13 appartenant à la couche de contrôle ADP. A l'étape S11, le processeur MP est en attente d'un événement provenant de l'interface sans contact CLI pour une application AP1-AP3 ou provenant d'une application. A l'arrivée d'un événement par l'interface CLI pour l'application AP2 par exemple, le processeur MP exécute l'étape S12. A l'étape S12, si le paramètre I1 indique que le contrôle de l'accès à l'interface sans contact CLI est activé pour l'application AP2 destinatrice de l'événement (paramètre I1 à l'état actif), l'étape S13 est exécutée, sinon l'événement reçu est transmis à l'application AP2 pour y être traité. A l'étape S13, si l'utilisation de l'interface CLI est autorisée (paramètre I2 dans un état d'autorisation) pour l'application AP2, l'événement reçu est transmis à l'application destinatrice AP2 pour y être traité, sinon l'événement n'est pas transmis à l'application, et le processeur MP se met en attente d'un nouvel événement à l'étape S11.

Sur la figure 5B, la séquence comprend l'étape S11, et des étapes S12' et S13' appartenant à la couche de contrôle ADP. A l'étape S11, à l'arrivée d'un événement provenant d'une application, par exemple de l'application AP2, le processeur MP exécute l'étape S12'. A l'étape S12', si le paramètre I1 de l'application indique que le contrôle de l'accès à l'interface sans contact CLI est activé pour l'application AP2 émettrice de l'événement (paramètre I1 de l'application AP2 à l'état actif), l'étape S13' est exécutée, sinon l'événement reçu est transmis à l'interface CLI pour y être envoyé. A l'étape S13', si l'utilisation de l'interface CLI est autorisée (paramètre I2 de l'application AP2 à l'état d'autorisation), l'événement reçu est transmis à l'interface CLI pour y être envoyé, sinon l'événement n'est pas transmis et le microprocesseur MP se met en attente d'un nouvel événement à l'étape S11. Dans le cas d'une carte à puce notamment, il peut être prévu que l'absence de réponse de la part d'une application en raison d'un filtrage d'événement effectué par la couche ADP, le microprocesseur MP émet un message de notification quelconque afin de ne pas perdre la synchronisation entre la carte et un terminal lecteur de la carte. Un tel message de notification permet en outre de ne pas informer le terminal par l'absence de réponse qu'un filtrage a été effectué.

La figure 6 représente une séquence d'étapes exécutée à la suite de l'activation du circuit intégré IC par l'interface avec contact CIN. La séquence comprend des étapes S21 à S31, les étapes S22 à S31 appartenant à la couche de contrôle ADP. A l'étape S21, le processeur MP est en attente d'un événement provenant de l'interface avec contact CIN ou d'une des applications AP1-AP3. A l'arrivée d'un événement de l'interface CIN, celui-ci est transmis à son destinataire, soit l'une des applications AP1-AP3 destinatrice de l'événement. Simultanément, le processeur MP exécute l'étape S22. A l'étape S22, si le paramètre I1 indique que le contrôle de l'accès à l'interface sans contact CLI est activé pour l'application destinatrice ou émettrice de l'événement (I1 à l'état actif), par exemple l'application AP2, l'étape S23 est exécutée, sinon l'exécution de la séquence est terminée. Les étapes S23 à S30 permettent de déterminer si le paramètre I2 de l'application AP2 peut passer de l'état d'interdiction à l'état d'autorisation (par exemple de 0 à 1), et si tel est le cas, de le mettre à l'état d'autorisation, sinon l'exécution de la séquence est terminée. A l'étape S23, si l'utilisation de l'interface CLI n'est pas autorisée (paramètre I2 à l'état d'interdiction) pour l'application AP2, le processeur MP exécute l'étape S24. A l'étape S24, si le paramètre I4 de l'application AP2 n'est pas défini ou est à l'état déverrouillé (par exemple à 1) indiquant que l'interdiction spécifiée par le paramètre I2 (à l'état d'interdiction) peut être outrepassée sous réserve qu'une règle suffisante soit remplie, le processeur MP exécute l'étape S25. A l'étape S25, si le dernier événement arrivé pour l'application correspond à un événement attendu comme spécifié par l'un des paramètres I3, le processeur exécute l'étape S26. A l'étape S26, si l'événement arrivé ne produit pas de changement d'état d'une règle, l'étape S27 est exécutée, sinon les étapes S28 et S29 sont exécutées. A l'étape S27, s'il est considéré que l'événement révèle une erreur ou une tentative de fraude, les états de toutes les règles mémorisés pour l'application AP2 peuvent alors être initialisés à l'état non satisfait. A l'étape S28, l'état de la règle satisfaite est placé à l'état satisfait. A l'état S29, si la règle satisfaite est suffisante, l'étape S30 est exécutée. A l'étape S30, le paramètre I2 de l'application AP2 est mis à l'état d'autorisation (par exemple 1) pour lever l'interdiction pour l'application AP2 d'utiliser l'interface sans contact CLI.

De cette manière, l'utilisation de l'interface sans contact CLI par une application AP1-AP3 peut être préalablement bloquée, interdisant toute transaction par cette interface, de sorte qu'un éventuel compteur de transaction reste dans son état initial. Cette utilisation peut ensuite être débloquée par une transaction réussie effectuée par l'interface avec contact CIN. L'interface CLI peut alors être utilisée pour réaliser une transaction ultérieure avec l'application si le contrôle de l'interface sans contact CLI est activé (I1 à l'état activé) pour l'application et si le paramètre I2 de l'application indique que l'utilisation de l'interface CLI est autorisée (I2 à l'état d'autorisation). Si l'état du paramètre I2 n'est pas verrouillé par le paramètre I4 (I4 à l'état déverrouillé), l'utilisation de l'interface CLI par l'application peut être autorisée (mise à l'état d'autorisation du paramètre I2) sous réserve que des règles spécifiées par des paramètres I3 soient satisfaites. Ces dispositions permettent l'émission d'une carte à circuit intégré à double interface dont l'interface CLI est préalablement interdite d'utilisation (I1 à l'état activé, I2 à l'état d'interdiction, I4 à l'état déverrouillé) par exemple par une application de paiement, et la définition d'une transaction exécutée à partir de l'interface avec contact CIN, permettant d'autoriser par la suite l'utilisation de l'interface sans contact CLI, si la transaction obéit à une ou plusieurs règles spécifiées à l'aide de paramètres I3. Les règles définies à l'aide des paramètres I3 peuvent par exemple autoriser l'utilisation de l'interface CLI par une application en cas de transaction en ligne réussie ou de transaction hors ligne avec validation par code PIN réussie.

Dans l'exemple des figures 5A, 5B et 6, l'utilisation de l'interface sans contact CLI par une application AP1-AP3 ne peut être débloquée que par une transaction exécutée avec succès avec l'application par l'intermédiaire de l'interface avec contact CIN. Il peut toutefois être prévu une application spécifique exécutable à partir de l'interface CLI dont les paramètres I1 et I2 sont initialement à l'état actif et à l'état d'autorisation, respectivement, et qui réalise la séquence d'étapes de la figure 6, pour autoriser l'utilisation de l'interface CLI par une autre application dont les paramètres I1 et I2 sont initialement à l'état actif et à l'état d'interdiction, respectivement, si certaines conditions (règles) sont réalisées par des événements émis ou destinés à l'application spécifique. Cette disposition permet notamment de vérifier l'identité du porteur de la carte, en ligne ou hors ligne, grâce à l'application spécifique, pour une autre application sensible comme une application de paiement, sans nécessairement incrémenter un compteur de transaction.

Les paramètres I1-I4 pour une application peuvent être mémorisés dans l'une des mémoires non volatiles MEM1, MEM2. L'indicateur I1 peut être mémorisé dans une mémoire modifiable (par exemple MEM2) ou non modifiable (par exemple MEM1). La définition des règles peut être également mémorisée dans la mémoire MEM2. En revanche, les états des règles sont mémorisés dans la mémoire volatile MEM3.

Il peut être envisagé de permettre la définition de règles d'interdiction pour interdire l'utilisation d'une interface de communication préalablement autorisée pour une application AP1-AP3. A cet effet, les règles définies pour une application peuvent être associées à un paramètre indiquant si la règle lorsqu'elle est vérifiée entraîne la mise à l'état d'interdiction ou d'autorisation du paramètre I2 de l'application, autorisant ou non l'utilisation de l'interface de communication par l'application. Grâce à cette disposition, il peut être spécifié qu'un ou plusieurs événements révélant par exemple une utilisation frauduleuse de la carte à circuit intégré, entraîne l'interdiction pour une application d'utiliser une interface de communication.

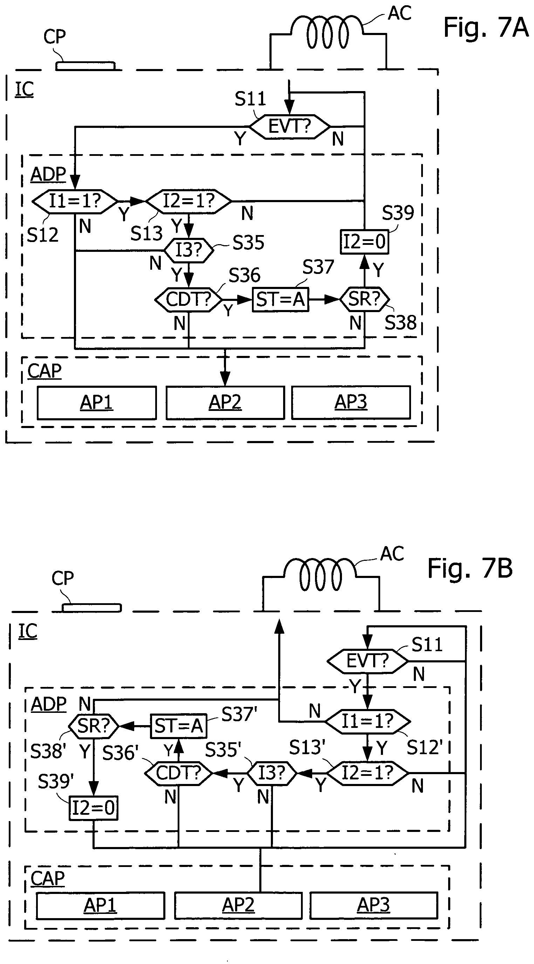

Ainsi, les figures 7A et 7B représentent des séquences d'étapes exécutées à la suite de l'activation du circuit intégré IC par l'interface sans contact CLI. Ces séquences comprennent des étapes de suppression de l'autorisation de l'accès à l'interface CLI par une application. La séquence d'étapes de la figure 7A est exécutée à la suite de la réception d'un événement par l'interface sans contact CLI pour l'une des applications AP1-AP3. La séquence d'étapes de la figure 7B est exécutée à la suite de l'émission d'un événement par l'une des applications AP1-AP3.

Sur la figure 7A, la séquence comprend les étapes S11 à S13, et des étapes supplémentaires S35 à S39 appartenant à la couche de contrôle ADP. A l'étape S11, le processeur MP est en attente d'un événement provenant de l'interface sans contact CLI pour ou provenant d'une application AP1-AP3. A l'arrivée d'un événement par exemple pour l'application AP2, le processeur MP exécute l'étape S12. A l'étape S12, si le paramètre I1 indique que le contrôle d'accès à l'interface sans contact CLI est activé pour l'application AP2 destinatrice de l'événement (paramètre I1 à l'état actif), l'étape S13 est exécutée, sinon l'événement reçu est transmis à l'application AP2 pour y être traité. A l'étape S13, si l'utilisation de l'interface CLI est autorisée (paramètre I2 à l'état d'autorisation) pour l'application AP2, l'étape S35 est exécutée, sinon l'événement n'est pas transmis à l'application, et le processeur MP se met en attente d'un nouvel événement à l'étape S11. A l'étape S35, si le dernier événement arrivé pour l'application correspond à un événement attendu comme spécifié par l'un des paramètres I3, le processeur exécute l'étape S36, sinon l'événement reçu est transmis à l'application destinatrice AP2 pour y être traité. A l'étape S36, si l'événement arrivé produit un changement d'état d'une règle, les étapes S37 et S38 sont exécutées, sinon l'événement reçu est transmis à l'application destinatrice AP2. A l'étape S37, l'état de la règle satisfaite est placé à l'état satisfait. A l'étape S38, si la règle satisfaite n'est pas suffisante, l'événement reçu est transmis à l'application destinatrice AP2, sinon l'étape S39 est exécutée. A l'étape S39, le paramètre I2 est mis à l'état d'interdiction et le processeur MP se met en attente d'un nouvel événement à l'étape S11 sans transmettre l'événement à l'application.

Sur la figure 7B, la séquence comprend les étapes S11, S12' et S13', et des étapes S35' à S39' appartenant à la couche de contrôle ADP. A l'étape S11, à l'arrivée d'un événement provenant de l'application, le processeur MP exécute l'étape S12'. A l'étape S12', si le paramètre I1 indique que le contrôle de l'accès à l'interface sans contact CLI est activé pour l'application émettrice de l'événement, l'étape S13' est exécutée, sinon l'événement reçu est transmis à l'interface CLI pour y être envoyé. A l'étape S13', si l'utilisation de l'interface CLI par l'application AP2 est autorisée (paramètre I2 à l'état d'autorisation), les étapes S35' à S38' sont exécutées, sinon le processeur MP se met en attente d'un nouvel événement à l'étape S11 sans envoyer l'événement reçu à l'interface CLI. A l'étape S35', si le dernier événement arrivé pour l'application correspond à un événement attendu comme spécifié par l'un des paramètres I3, le processeur exécute l'étape S36', sinon l'événement reçu est transmis à l'interface CLI pour y être envoyé. A l'étape S36', si l'événement arrivé produit un changement d'état d'une règle, les étapes S37' et S38' sont exécutées, sinon l'événement reçu est transmis à l'interface CLI pour y être envoyé. A l'étape S37', l'état de la règle satisfaite est placé à l'état satisfait. A l'état S38', si la règle satisfaite n'est pas suffisante, l'événement reçu est transmis à l'interface CLI pour y être envoyé, sinon l'étape S39' est exécutée. A l'étape S39', le paramètre I2 est mis à l'état d'interdiction et le processeur MP se met en attente d'un nouvel événement à l'étape S11 sans transmettre l'événement à l'interface CLI.

Les séquences des figures 7A et 7B permettent ainsi d'interdire l'utilisation de l'interface CLI pour une application AP1-AP3 à la suite de l'arrivée d'un événement ou d'une combinaison d'événements émis par l'application ou l'interface CLI. Pour une application sensible comme une application de paiement, il est ainsi possible de définir des conditions d'autorisation et d'interdiction d'accès à une interface de communication.

De même, il peut également être spécifié des règles pour changer l'état du paramètre I4 d'une application si ces règles sont satisfaites. Il peut également être prévu de gérer des paramètres I1-I4 et l'état de règles non seulement pour chaque application, mais également pour chaque interface de communication du circuit intégré IC. Ainsi, une application peut modifier son autorisation d'accès à une interface de communication si une transaction s'est déroulée avec succès par une autre interface de communication dont l'accès a été préalablement autorisé.

Il apparaîtra clairement à l'homme de l'art que la présente invention est susceptible de diverses variantes de réalisation et diverses applications. En particulier, l'invention n'est pas limitée à une carte à microprocesseur, mais s'applique à tout support portatif (par exemple un dongle, une clé USB, ordinateur portable, ...) intégrant un microcircuit capable de mettre en oeuvre le procédé décrit précédemment. L'invention n'est pas non plus limitée à une carte à double interface, mais peut être mise en oeuvre dans une carte à simple interface ou comportant plus de deux interfaces de communication. L'invention s'applique également à tout type d'interface de communication avec ou sans contact telle que celles conformes aux normes Bluetooth, WiFi, etc.

## Revendications

1. Procédé de contrôle d'accès à une interface de communication d'un circuit intégré (IC) comprenant un premier circuit d'interface de communication (CLI, CIN),
**caractérisé en ce qu'**il comprend des étapes :
d'interception par une couche logicielle de contrôle d'accès (ADP), d'événements transmis entre le premier circuit d'interface de communication et plusieurs applications (AP1-AP3) installées dans une couche logicielle applicative (CAP) dans le circuit intégré,
d'attribution à chacune des applications (AP1-AP3) de la couche applicative (CAP) d'un paramètre (I2) spécifique de l'application, indiquant si l'application est autorisée à utiliser le premier circuit d'interface de communication (CLI),
de transmission par la couche de contrôle d'accès (ADP), d'un événement intercepté entre le premier circuit d'interface de communication et l'une des applications de la couche applicative, uniquement si le paramètre spécifique de l'application indique que l'application est autorisée à utiliser le premier circuit d'interface de communication (CLI), et
de mise à jour par la couche de contrôle d'accès, du paramètre spécifique de l'application si une condition est remplie par des événements interceptés, transmis entre une autre des applications de la couche applicative et le premier circuit d'interface de communication.

2. Procédé selon la revendication 1, comprenant une étape de mise à jour par la couche de contrôle d'accès (ADP), du paramètre (I2) spécifique d'une des applications (AP1-AP3) de la couche applicative, indiquant si l'application est autorisée à utiliser le premier circuit d'interface de communication (CLI), en fonction des événements interceptés, transmis entre le premier circuit d'interface de communication et l'application.

3. Procédé selon la revendication 1 ou 2, dans lequel le premier circuit d'interface de communication (CLI) est de type sans contact.

4. Procédé selon l'une des revendications 1 à 3, comprenant une étape d'autorisation par la couche de contrôle d'accès (ADP), de l'une des applications (AP1-AP3) de la couche applicative (CAP) à utiliser le premier circuit d'interface de communication (CLI) si une condition est remplie par des événements transmis entre l'application et un second circuit d'interface de communication (CIN) du circuit intégré (IC).

5. Procédé selon la revendication 4, dans lequel le second circuit d'interface de communication (CIN) est de type à contact ou sans contact.

6. Procédé selon l'une des revendications 1 à 5, comprenant une étape de mise à jour par la couche de contrôle d'accès (ADP), du paramètre spécifique de l'une des applications (AP1-AP3) de la couche applicative (CAP) si une condition est remplie par des événements transmis entre une autre des applications de la couche applicative et un second circuit d'interface de communication (CIN) du circuit intégré (IC).

7. Procédé l'une des revendications 1 à 6, comprenant des étapes exécutées par la couche de contrôle d'accès (ADP), de vérification qu'une condition est remplie par l'un des événements interceptés, si le paramètre (I2) spécifique de l'une des applications (AP1-AP3) de la couche applicative (CAP) indique que l'application n'est pas autorisée à utiliser le premier circuit d'interface de communication (CLI), et si la condition est remplie, transmission de l'événement intercepté et modification du paramètre (I2) spécifique de l'application pour qu'il indique que l'application est autorisée à utiliser le premier circuit d'interface de communication.

8. Procédé selon la revendication 7, dans lequel la modification du paramètre (I2) spécifique de l'une des applications (AP1-AP3) de la couche applicative (CAP) pour qu'il indique que l'application est autorisée à utiliser le premier circuit d'interface de communication (CLI), n'est effectuée que si elle est autorisée par un autre paramètre (I4) spécifique de l'application.

9. Procédé selon l'une des revendications 1 à 8, comprenant des étapes de vérification par la couche de contrôle d'accès (ADP) qu'une condition (I3) est remplie par l'un des événements interceptés si le paramètre (I2) spécifique de l'une des applications (AP1-AP3) indique que l'application est autorisée à utiliser le premier circuit d'interface de communication (CLI), et si la condition est remplie, l'événement intercepté n'est pas transmis et le paramètre (I2) spécifique de l'application est modifié par la couche de contrôle d'accès pour qu'il indique que l'application n'est plus autorisée à utiliser le premier circuit d'interface de communication.

10. Procédé selon l'une des revendications 1 à 9, comprenant des étapes exécutées par la couche de contrôle d'accès (ADP), de mémorisation pour l'une des applications (AP1-AP3) de la couche applicative (CAP) d'un paramètre (I1) spécifiant si le contrôle d'accès au premier circuit d'interface de communication (CLI) est activé pour l'application, et de vérification de l'état du paramètre à chaque interception d'un événement transmis pour l'application, les événements étant systématiquement transmis entre le premier circuit d'interface de communication (CLI) et l'application si le paramètre indique que le contrôle d'accès au premier circuit d'interface de communication n'est pas activé.

11. Procédé selon l'une des revendications 1 à 10, comprenant des étapes exécutées par la couche de contrôle d'accès (ADP), de mémorisation de règles d'autorisation et/ou d'interdiction de l'utilisation de chaque circuit d'interface de communication (CLI, CIN) du circuit intégré (IC) pour chacune des applications (AP1-AP3) de la couche applicative (CAP), de mémorisation d'états de vérification des règles et de mise à jour des états de vérification des règles en fonction de chaque événement intercepté.

12. Circuit intégré comprenant un circuit d'interface de communication (CLI, CIN) connecté soit à des contacts, soit à un circuit d'antenne,
**caractérisé en ce qu'**il comprend un microcircuit configuré pour mettre en oeuvre le procédé selon l'une des revendications 1 à 11.

13. Circuit intégré selon la revendication 12, comprenant un circuit d'interface de communication à contact (CIN) connecté à des contacts (CP), et un circuit d'interface de communication sans contact (CLI) connecté à un circuit d'antenne (AC).

14. Circuit intégré selon la revendication 12 ou 13, comprenant une couche applicative (CAP) rassemblant plusieurs applications (AP1-AP3) installées dans le circuit intégré (IC), et une couche de contrôle d'accès (ADP) configurée pour intercepter des événements transmis entre la couche applicative et chaque circuit d'interface de communication (CLI, CIN), et transmettre un événement intercepté seulement si un paramètre (I2) spécifique d'une application (AP1-AP3) destinatrice de l'événement ou ayant émis l'événement, indique que l'application est autorisée à utiliser le circuit d'interface de communication (CLI).

15. Carte à circuit intégré, **caractérisée en ce qu'**elle comprend un circuit intégré selon l'une des revendications 12 à 14.

## Patentansprüche

1. Verfahren zum Kontrollieren des Zugangs zu einer Kommunikationsschnittstelle einer integrierten Schaltung (IC), die eine erste Kommunikationsschnittstellenschaltung (CLI, CIN) umfasst, **dadurch gekennzeichnet, dass** es folgende Schritte umfasst:
Abfangen von Ereignissen, die zwischen der ersten Kommunikationsschnittstellenschaltung und mehreren Anwendungen (AP1-AP3), die in einer Anwendungssoftwareschicht (CAP) in der integrierten Schaltung installiert sind, durch eine Zugangskontroll-Softwareschicht (ADP) übertragen werden, Zuordnung eines spezifischen Parameters (I2) der Anwendung zu jeder der Anwendungen (AP1-AP3) der Anwendungsschicht (CAP), der angibt, ob die Anwendung berechtigt ist, die erste Kommunikationsschnittstellenschaltung (CLI) zu verwenden, Übertragung eines Ereignisses, das zwischen der ersten Kommunikationsschnittstellenschaltung und einer der Anwendungen der Anwendungsschicht abgefangen wird, durch die Zugangskontrollschicht (ADP), nur dann, wenn der spezifische Parameter der Anwendung angibt, dass die Anwendung berechtigt ist, die erste Kommunikationsschnittstellenschaltung (CLI) zu verwenden, sowie Aktualisierung des spezifischen Parameters der Anwendung durch die Zugangskontrollschicht, wenn eine Bedingung durch abgefangene Ereignisse erfüllt ist, die zwischen einer anderen der Anwendungen der Anwendungsschicht und der ersten Kommunikationsschnittstellenschaltung übertragen werden.

2. Verfahren nach Anspruch 1, umfassend einen Schritt der Aktualisierung des spezifischen Parameters (I2) einer der Anwendungen (AP1-AP3) der Anwendungsschicht durch die Zugangskontrollschicht (ADP), wobei angegeben wird, ob die Anwendung berechtigt ist, die erste Kommunikationsschnittstellenschaltung (CLI) gemäß den abgefangenen Ereignissen zu verwenden, die zwischen der ersten Kommunikationsschnittstellenschaltung und der Anwendung übertragen werden.

3. Verfahren nach Anspruch 1 oder 2, wobei die erste Kommunikationsschnittstellenschaltung (CLI) kontaktlos ist.

4. Verfahren nach einem der Ansprüche 1 bis 3, umfassend einen Schritt der Berechtigung einer der Anwendungen (AP1-AP3) der Anwendungsschicht (CAP) durch die Zugangskontrollschicht (ADP), die erste Kommunikationsschnittstellenschaltung (CLI) zu verwenden, wenn eine Bedingung durch Ereignisse erfüllt ist, die zwischen der Anwendung und einer zweiten Kommunikationsschnittstellenschaltung (CIN) der integrierten Schaltung (IC) übertragen werden.

5. Verfahren nach Anspruch 4, wobei die zweite Kommunikationsschnittstellenschaltung (CIN) Kontakt hat oder kontaktlos ist.

6. Verfahren nach einem der Ansprüche 1 bis 5, umfassend einen Schritt der Aktualisierung des spezifischen Parameters einer der Anwendungen (AP1-AP3) der Anwendungsschicht (CAP) durch die Zugangskontrollschicht (ADP), wenn eine Bedingung durch Ereignisse erfüllt ist, die zwischen einer anderen der Anwendungen der Anwendungsschicht und einer zweiten Kommunikationsschnittstellenschaltung (CIN) der integrierten Schaltung (IC) übertragen werden.

7. Verfahren nach einem der Ansprüche 1 bis 6, umfassend die Schritte, die von der Zugangskontrollschicht (ADP) durchgeführt werden, Überprüfung, ob eine Bedingung durch eines der abgefangenen Ereignisse erfüllt ist, wenn der spezifische Parameter (I2) einer der Anwendungen (AP1-AP3) der Anwendungsschicht (CAP) angibt, dass die Anwendung nicht berechtigt ist, die erste Kommunikationsschnittstellenschaltung (CLI) zu verwenden, und wenn die Bedingung erfüllt ist, Übertragung des abgefangenen Ereignisses und Änderung des spezifischen Parameters (I2) der Anwendung, damit er angibt, dass die Anwendung berechtigt ist, die erste Kommunikationsschnittstellenschaltung zu verwenden.

8. Verfahren nach Anspruch 7, umfassend die Änderung des spezifischen Parameters (I2) einer der Anwendungen (AP1-AP3) der Anwendungsschicht (CAP), damit er angibt, dass die Anwendung berechtigt ist, die erste Kommunikationsschnittstellenschaltung (CLI) zu verwenden, was nur durchgeführt wird, wenn sie die Berechtigung von einem anderen spezifischen Parameter (I4) der Anwendung erhält.

9. Verfahren nach einem der Ansprüche 1 bis 8, umfassend die Schritte der Überprüfung durch die Zugangskontrollschicht (ADP), dass eine Bedingung (13) durch eines der abgefangenen Ereignisse erfüllt ist, wenn der spezifische Parameter (12) einer der Anwendungen (AP1-AP3) angibt, dass die Anwendung berechtigt ist, die erste Kommunikationsschnittstellenschaltung (CLI) zu verwenden, und wenn die Bedingung erfüllt ist, wird das abgefangene Ereignis nicht übertragen und der spezifische Parameter (I2) der Anwendung wird durch die Zugangskontrollschicht geändert, damit er angibt, dass die Anwendung nicht mehr berechtigt ist, die erste Kommunikationsschnittstellenschaltung zu verwenden.

10. Verfahren nach einem der Ansprüche 1 bis 9, umfassend Schritte, die von der Zugangskontrollschicht (ADP) durchgeführt werden, Speicherung eines spezifischen Parameters (I1) für eine der Anwendungen (AP1-AP3) der Anwendungsschicht (CAP), der angibt, ob die Zugangskontrolle zur ersten Kommunikationsschnittstellenschaltung (CLI) für die Anwendung aktiviert ist, und Überprüfung des Status des Parameters bei jedem Abfangen eines für die Anwendung übertragenen Ereignisses, wobei die Ereignisse systematisch zwischen der ersten Kommunikationsschnittstellenschaltung (CLI) und der Anwendung übertragen werden, wenn der Parameter angibt, dass die Zugangskontrolle zur ersten Kommunikationsschnittstellenschaltung nicht aktiviert ist.

11. Verfahren nach einem der Ansprüche 1 bis 10, umfassend die Schritte, die von der Zugangskontrollschicht (ADP) durchgeführt werden, Speicherung von Berechtigungsregeln und/oder Verbot der Verwendung jeder Kommunikationsschnittstellenschaltung (CLI, CIN) der integrierten Schaltung (IC) für jede der Anwendungen (AP1-AP3) der Anwendungsschicht (CAP), Speicherung der Status der Regelüberprüfung und Aktualisierung der Status der Regelüberprüfung gemäß jedem abgefangenen Ereignis.

12. Integrierte Schaltung, umfassend eine Kommunikationsschnittstellenschaltung (CLI, CIN), die entweder mit Kontakten oder mit einer Antennenschaltung verbunden ist, **dadurch gekennzeichnet, dass** sie eine Mikroschaltung umfasst, die konfiguriert ist, um das Verfahren nach einem der Ansprüche 1 bis 11 durchzuführen.

13. Integrierte Schaltung nach Anspruch 12, umfassend eine Kontaktkommunikationsschnittstellenschaltung (CIN), die mit Kontakten (CP) verbunden ist, und eine kontaktlose Kommunikationsschnittstellenschaltung (CLI), die mit einer Antennenschaltung (AC) verbunden ist.

14. Integrierte Schaltung nach Anspruch 12 oder 13, umfassend eine Anwendungsschicht (CAP) mit einer Vielzahl von Anwendungen (AP1-AP3), die in der integrierten Schaltung (IC) installiert sind, und eine Zugangskontrollschicht (ADP), die konfiguriert ist, um Ereignisse abzufangen, die zwischen der Anwendungsschicht und jeder Kommunikationsschnittstellenschaltung (CLI, CIN) übertragen werden, und Übertragung eines abgefangenen Ereignisses, jedoch nur dann, wenn ein spezifischer Parameter (I2) einer Anwendung (AP1-AP3), die das Ereignis empfängt oder das Ereignis übertragen hat, angibt, dass die Anwendung berechtigt ist, die Kommunikationsschnittstellenschaltung (CLI) zu verwenden.

15. Karte mit integrierter Schaltung, **dadurch gekennzeichnet, dass** sie eine integrierte Schaltung nach einem der Ansprüche 12 bis 14 umfasst.

## Claims

1. A method of access control to a communication interface of an integrated circuit (IC) comprising a first communication interface circuit (CLI, CIN),
**characterized in that** it comprises steps of:
intercepting by an access control software layer (ADP) events transmitted between the first communication interface circuit and several applications (AP1-AP3) installed in an applicative software layer (CAP) on the integrated circuit,
allocating to each application (AP1-AP3) of the applicative layer (CAP) a parameter (12) specific to the application, indicating whether the first application is authorized to use the first communication interface circuit (CLI),
transmitting by the access control layer (ADP), an event intercepted between the first communication interface circuit and one of the applications of the applicative layer, only if the parameter specific to the application indicates that the application is authorized to use the first communication interface circuit (CLI), and
updating by the access control layer, the parameter specific to the application if a condition is fulfilled by intercepted events, transmitted between another of the applications of the applicative layer and the first communication interface circuit.

2. The method according to claim 1, comprising a step of updating by the access control layer (ADP) the parameter (12) specific to one of the applications (AP1-AP3) of the applicative layer, indicating whether the application is authorized to use the first communication interface circuit (CLI), as a function of the intercepted events, transmitted between the communication interface circuit and the application.

3. The method according to claim 1 or 2, wherein the first communication interface circuit (CLI) is of contactless type.

4. The method according to one of claims 1 to 3, comprising a step of authorizing by the access control layer (ADP), one of the applications (AP1-AP3) of the applicative layer (CAP) to use the first communication interface circuit (CLI) if a condition is fulfilled by events transmitted between the application and a second communication interface circuit (CIN) of the integrated circuit (IC).

5. The method according to claim 4, wherein the second communication interface circuit (CIN) is of contact or contactless type.

6. The method according to one of claims 1 to 5, comprising a step of updating by the access control layer (ADP), the parameter specific to one of the applications (AP1-AP3) of the applicative layer (CAP) if a condition is fulfilled by events transmitted between another of the applications of the applicative layer and a second communication interface circuit (CIN) of the integrated circuit (IC).

7. The method according to one of claims 1 to 6, comprising steps executed by the access control layer (ADP), of verifying whether a condition is fulfilled by one of the intercepted events, if the parameter (12) specific to one of the applications (AP1-AP3) of the applicative layer (CAP) indicates that the application is not authorized to use the first communication interface circuit (CLI), and if the condition is fulfilled, transmitting the intercepted event and modifying the parameter (12) specific to the application so that it indicates that the application is authorized to use the first communication interface circuit.

8. The method according to claim 7, wherein the modification of the parameter (12) specific to one of the applications (AP1-AP3) of the applicative layer (CAP) to indicate that the application is authorized to use the first communication interface circuit (CLI) is performed only if it is authorized by another parameter (14) specific to the application.

9. The method according to one of claims 1 to 8, comprising steps of verifying by the access control layer (ADP), whether a condition (13) is fulfilled by one of the intercepted events if the parameter (12) specific to one of the applications (AP1-AP3) indicates that the application is authorized to use the first communication interface circuit (CLI), and if the condition is fulfilled, the intercepted event is not transmitted and the parameter (12) specific to the application is modified by the access control layer to indicate that the application is no longer authorized to use the first communication interface circuit.

10. The method according to one of claims 1 to 9, comprising steps executed by the access control layer (ADP), of storing for one of the applications (AP1-AP3) of the applicative layer (CAP) a parameter (II) specifying whether the access control to the first communication interface circuit (CLI) is activated for the application, and verifying the state of the parameter each time that an event transmitted for the application is intercepted, the events being systematically transmitted between the first communication interface circuit (CLI) and the application if the parameter indicates that the access control to the first communication interface circuit is not activated.

11. The method according to one of claims 1 to 10, comprising step executed by the access control layer (ADP), of storing authorization and/or refusal rules of use of each communication interface circuit (CLI, CIN) of the integrated circuit (IC) for each of the applications (AP1-AP3) of the applicative layer (CAP), storing verification states of rules, and updating verification states of rules as a function of each intercepted event.

12. An integrated circuit comprising a communication interface circuit (CLI, CIN) connected to either contacts or an antenna circuit,
**characterized in that** it comprises a microcircuit configured to implement the method according to one of claims 1 to 11.

13. The integrated circuit according to claim 12, comprising a contact communication interface circuit (CIN) connected to contacts (CP), and a contactless communication interface circuit (CLI) connected to an antenna circuit (AC).

14. The integrated circuit according to claim 12 or 13, comprising an application layer (CAP) gathering several applications(AP1-AP3) installed on the integrated circuit (IC), and an access control layer (ADP) configured to intercept events transmitted between the application layer and each communication interface circuit (CLI, CIN), and transmit an intercepted event only if a parameter (12) specific to an application (AP1-AP3) recipient of the event or having emitted the event, indicates that the application is authorized to use the communication interface circuit (CLI).

15. An integrated circuit card, **characterized in that** if comprises an integrated circuit according to one of claims 12 to 14.
